# EUROPÄISCHE PATENTANMELDUNG

(11) **EP 4 576 512 A1**
(43) Veröffentlichungstag der Anmeldung: **25.06.2025**
(21) Anmeldenummer: 23218170.1
(22) Anmeldetag: 19.12.2023
(51) Int. Cl.: H02K 3/52, F16B 39/10

(54) **POLWICKLUNGSSTÜTZE EINER ELEKTRISCHEN MASCHINE**

(71) Anmelder: Innomotics GmbH, 90441 Nürnberg (DE)
(72) Erfinder: Menz, Ingo, 14057 Berlin (DE); Petereit, Peter, 12555 Berlin (DE); Schubert, Manuela, 13187 Berlin (DE); Vogler, Matthias, 10245 Berlin (DE); Wieschalla, Martin, 12305 Berlin (DE)
(74) Vertreter: Michalski Hüttermann & Partner Patentanwälte mbB

(57) **Zusammenfassung**

Eine Polwicklungsstütze (1) einer elektrischen Maschine, mit Polwicklungsstützenschrauben (2,3,4) und einer Sicherung (5,6) für zumindest eine Polwicklungsstützenschraube (2,3,4), weist eine fest positionierte Sicherung (5,6) für eine Polwicklungsstützenschraube (2,3,4) auf. Gemäß eines Verfahrens zur Sicherung einer Polwicklungsstützenschraube (2,3,4) einer Polwicklungsstütze einer elektrischen Maschine werden Polwicklungsstützenschrauben (2,3,4), abhängig von einer Kontur einer Sicherung (5,6) für die Polwicklungsstützenschrauben (2,3,4), in einer durch die Sicherung (5,6) vorgegebenen Position gesichert.

## Beschreibung

Die Erfindung bezieht sich auf eine Polwicklungsstütze einer elektrischen Maschine. Für Polwicklungen bei, beispielsweise einer Schenkelpolmaschine, sind insbesondere bei größeren Leistungen Polwicklungsstützen vorzusehen. Bei langen Läufern können mehrere derartige Stützen nebeneinander angeordnet werden. Die Polwicklungsstützen weisen Polwicklungsstützenschrauben auf. Die Polwicklungsstützenschrauben sind zu sichern. Durch die Sicherung wird insbesondere ein Lösen der Polwicklungsstützenschrauben verhindert.

Eine Aufgabe der vorliegenden Erfindung ist es eine Möglichkeit der Sicherung der Polwicklungsstützenschrauben anzugeben. Vorteilhaft ist insbesondere eine einfache und verletzungsfreie Sicherung gegen Lösen und/oder Verdrehen der Polwicklungsstützenschrauben. Dies betrifft insbesondere nicht vorgespannte Polwicklungsstützenschrauben.

Eine Lösung der Aufgabe ergibt sich bei einer Polwicklungsstütze nach Anspruch 1 bzw. bei einem Verfahren zur Sicherung einer Polwicklungsstützenschraube nach Anspruch 8. Ausgestaltungen dieser Lösungen ergeben sich insbesondere gemäß der Ansprüche 2 bis 7, 9 und 10.

Die Polwicklungsstützen einer elektrischen Maschine, insbesondere einer Schenkelpolmaschine können zur Sicherung der Polwicklungsstützenschrauben ein geschlitztes Sicherungsblech aufweisen. Nach einem handfesten Anziehen der Polwicklungsstützenschrauben mit einem Anzugsmoment von z.B. 400 Nm bei M36er Schrauben und einem Anzugsmoment von z.B. 500 Nm bei M42er Schrauben und nach dem Schleudern des Läufers werden die Ecken des Sicherungsbleches mit einem Hammer umgeschlagen. Dabei kann es zu Verletzungen z.B. an einer Hand oder auch beim Abrutschen mit dem Werkzeug zu einer Beschädigung eines angrenzenden Bauteils kommen.

Die Erfindung betrifft eine Polwicklungsstütze einer elektrischen Maschine, wie auch die elektrische Maschine selbst und ein Verfahren zur Herstellung der elektrischen Maschine bzw. ein Verfahren zur Sicherung einer Polwicklungsstützenschraube einer elektrischen Maschine. Die elektrische Maschine ist insbesondere eine Schenkelpolmaschine.

Eine Polwicklungsstütze einer elektrischen Maschine weist Polwicklungsstützenschrauben auf. Die Polwicklungsstützenschrauben sind über eine Stütze in eine Welle der elektrischen Maschine eingedreht (eingeschraubt). Die Polwicklungsstütze weist eine Sicherung für zumindest eine Polwicklungsstützenschraube auf, wobei die Sicherung mit der Stütze und/oder einem Zwischenelement fest verbunden ist. Das Zwischenelement ist beispielsweise durch die Polwicklungsstützenschrauben auf der Stütze gehalten. Die Stütze weist insbesondere zumindest eine Durchführung zum Durchführen der Polwicklungsstützenschraube bzw. Schrauben auf, um diese mit der Welle verschrauben zu können. Die feste Verbindung zur Fixierung der Sicherung ist beispielsweise eine Schraubverbindung oder eine Schweißverbindung. Für die Schraubverbindung zwischen der Sicherung und der Stütze werden insbesondere zumindest zwei Schrauben verwendet. Kann sich die Sicherung abstützen, so kann auch nur eine einzige Schraube verwendet werden, da das Element, an welches sich die Sicherung abstützt, als eine Drehmomentstütze dient. Als Polwicklungsstützenschrauben werden insbesondere nicht vorgespannte Polwicklungsstützenschrauben verwendet. Bei der Herstellung der elektrischen Maschine bzw. der Polwicklungsstütze wird die Sicherung für die Polwicklungsstützenschrauben erst dann angebracht, wenn die Polwicklungsstützenschrauben bereits verschraubt sind.

In einer Ausgestaltung der Polwicklungsstütze befindet sich zwischen der Sicherung und der Stütze ein Zwischenelement, wie ein Blech, welches flächig ausgeführt ist. Insbesondere befindet sich dieses Zwischenelement auch zwischen dem Schraubenkopf der Polwicklungsstützenschraube und der Stütze, welches die Polwicklungsstützenschraube aufnimmt. Die Sicherung ist insbesondere mit dem Zwischenelement, welches aus einem Blech gefertigt ist, verschraubt. Die Stütze ist beispielsweise aus Aluminium gefertigt.

In einer Ausgestaltung der Polwicklungsstütze ist die Sicherung mit dem Zwischenelement verschraubt. Die Sicherung ist beispielsweise eine Metallplatte (ein Blech) mit einem Loch oder mehreren Löchern. Durch die Löcher lassen sich Schrauben führen, um die Sicherung mit der Stütze und/oder dem Zwischenelement über eine Schraubverbindung zu verbinden. Das Zwischenelement wird beispielsweise durch die Polwicklungsstützenschrauben auf der Stütze gehalten.

In einer Ausgestaltung der Polwicklungsstütze ist die Sicherung mit dem Zwischenelement und/oder der Stütze verschweißt. So ergibt sich eine nicht lösbare Verbindung.

In einer Ausgestaltung der Polwicklungsstütze sichert eine Sicherung zumindest zwei Polwicklungsstützenschrauben. Dafür ist die Sicherung beispielsweise zwischen zwei Polwicklungsstützenschrauben positioniert.

In einer Ausgestaltung der Polwicklungsstütze weist die Sicherung eine Kontur auf, welche der Kontur des Kopfes der Polwicklungsstützenschraube entspricht. So kann sich die Polwicklungsstützenschraube an der Sicherung abstützen und ist damit vor Verdrehen bzw. Herausdrehen gesichert. Die Sicherung der Polwicklungsstützenschrauben durch die Sicherung erfolgt insbesondere durch einen Formschluss zwischen der Sicherung und der Polwicklungsstützenschraube bzw. der Polwicklungsstützenschrauben. Dies gelingt beispielsweise durch eine entsprechende Kontur der Sicherung also einer Form der Sicherung und einer Form bzw. Kontur des Kopfes der Polwicklungsstützenschraube bzw. Polwicklungsstützenschrauben. Die Kontur der Sicherung und die Kontur der zugehörigen zu sichernden Polwicklungsstützenschraube entsprechen sich. Wenn sich Konturen entsprechen, bedeutet dies insbesondere, dass die Konturen von zwei Teilen, die miteinander verbunden werden sollen oder sich abstützen, übereinstimmen. Eine Konturübereinstimmung kann sicherstellen, dass die Teile korrekt ausgerichtet sind und sich abstützen. Die Konturübereinstimmung kann durch eine Passung erreicht werden, bei der die Konturen der beiden Teile so geformt sind, dass sie ineinander bzw. zueinander passen.

In einer Ausgestaltung der Polwicklungsstütze ist die Sicherung zwischen zwei Polwicklungsstützenschrauben angeordnet. So kann mit nur einer Sicherung eine erste und eine zweite Polwicklungsstützenschraube gesichert werden.

In einer Ausgestaltung der Polwicklungsstütze ist die Polwicklungsstützenschraube abhängig von der Kontur des Kopfes der Polwicklungsstützenschraube in einer vorgegebenen Position gesichert. Der Kopf der Polwicklungsstützenschraube hat beispielsweise einen sechseckigen Querschnitt, also eine Kontur mit sechs Ecken. Die Sicherung weist zumindest für eine dieser sechs Ecken einen entsprechenden Winkel bzw. eine Kerbe auf. Die Kontur bzw. der Querschnitt kann auch andere Formen annehmen, wobei zumindest eine Ecke ausgebildet ist.

Bei einem Verfahren zur Sicherung einer Polwicklungsstützenschraube einer Polwicklungsstütze einer elektrischen Maschine werden Polwicklungsstützenschrauben, abhängig von einer Kontur einer Sicherung für die Polwicklungsstützenschrauben, in einer durch die Sicherung vorgegebenen Position gesichert bzw. gehalten.

In einer Ausgestaltung des Verfahrens sind bzw. werden die Polwicklungsstützenschrauben mit unterschiedlichen Anzugsmomenten angezogen. So können Polwicklungsstützenschrauben in bestimmten Positionen auf dem Zwischenelement und/oder auf der Stütze positioniert werden, um eine Sicherung anzubringen. Dabei befindet sich die Sicherung insbesondere immer in der gleichen Position unabhängig von der verwendeten Schraube, wobei Schrauben gleicher Art verwendet werden.

In einer Ausgestaltung des Verfahrens wird eine Polwicklungsstütze der beschriebenen Art verwendet.

Zur weiteren Erläuterung der Erfindung wird auf die Figuren Bezug genommen, mittels derer die Erfindung beispielhaft veranschaulicht wird. Dabei zeigt:
- FIG 1: eine erste Sicherung für Polwicklungsstützenschrauben und
- FIG 2: eine zweite Sicherung für Polwicklungsstützenschrauben

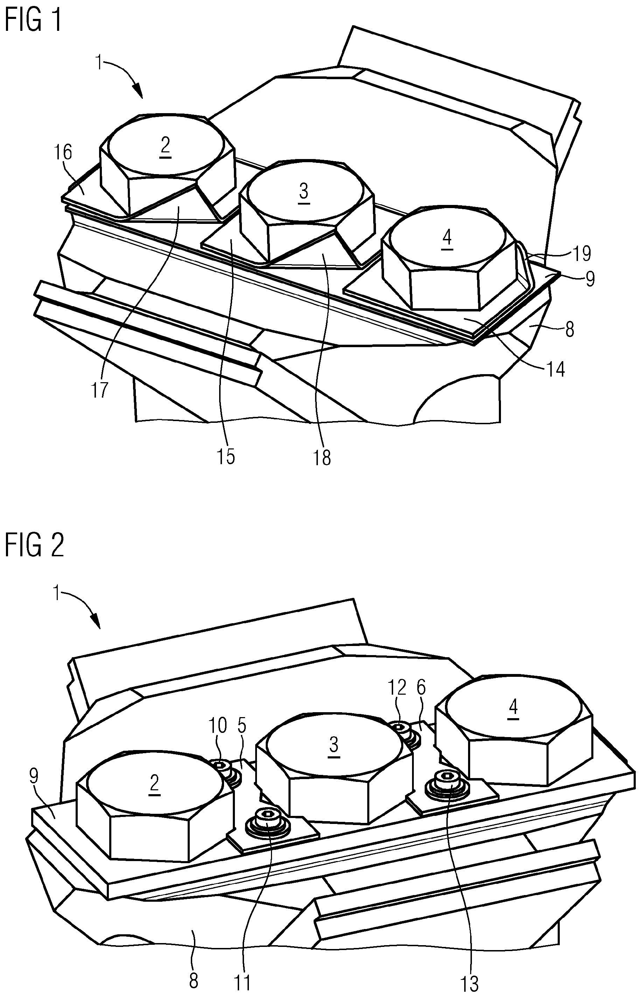

Die Darstellung nach Figur 1 zeigt eine Polwicklungsstütze 1. Die Polwicklungsstütze 1 weist Polwicklungsstützenschrauben 2, 3, 4 auf. Die Polwicklungsstützenschrauben 2, 3, 4 sind über eine Stütze 8 in eine Welle (nicht dargestellt) eingedreht (eingeschraubt). Die Polwicklungsstützenschrauben 2, 3, 4 werden durch Sicherungen 14, 15, 16 gesichert, indem die Sicherungen 14, 15, 16 im Bereich einer Ecke 17, 18, 19 nach oben zum Kopf der Polwicklungsstützenschraube gebogen sind. Durch die zum Kopf der Schraube (nach oben) gebogenen Sicherungen, welche als Blech ausgeführt sein können, sind die Schrauben gesichert. Zwischen den Sicherungen 14, 15, 16 und der Stütze 8, welche insbesondere aus Aluminium gefertigt ist, befindet sich ein Zwischenelement 9, welches insbesondere aus Blech gefertigt ist.

Die Darstellung nach Figur 2 zeigt eine Polwicklungsstütze 1. Die Polwicklungsstütze 1 weist Polwicklungsstützenschrauben 2, 3, 4 auf. Die Polwicklungsstützenschrauben 2, 3, 4 sind in eine Welle (nicht dargestellt) 8 eingedreht (eingeschraubt) und durch die Stütze 8 geführt. Die Polwicklungsstützenschrauben 2, 3, 4 werden durch Sicherungen 5, 6 gesichert. Die Sicherungen 5, 6 sind mittels Schrauben 10, 11, 12, 13 mit dem Zwischenelement 9 und/oder der Stütze 8 verbunden. Die Polwicklungsstützenschrauben 2, 3, 4 weisen Köpfe auf. Zwischen den Köpfen der Schrauben und der Stütze 8, sowie zwischen den Sicherungen 5, 6 und der Stütze 8 befindet sich eine Zwischenschicht, das Zwischenelement 9. Bei einer Aufbereitung von Anzugmomenten für die Polwicklungsstützenschrauben ist es möglich, die Schraubenköpfe in eine bestimmte Position zur Stütze 8 bzw. zu fix montierbaren Sicherungen 5, 6 zu bringen. Beispielsweise können Anzugsmomente in einen Bereich von 250 - 750 Nm aufgeweitet werden, so dass die Schraubenköpfe in eine Position gebracht werden können, die es erlaubt, ein in 30° gerastertes Blech mit Schraubenkopfkontur zwischen die Schraubenköpfe einzulegen und festzuschrauben. Dieses Blech stellt die Sicherung 5 bzw. 6 dar. Dieser Formschluss verhindert ein Lockern der Polwicklungsstützenschrauben. Da die Polwicklungsstützenschrauben 2, 3, 4 insbesondere nicht vorgespannt, sondern nur handfest angezogen werden können, ist kein definiertes Anzugsmoment notwendig. Es wird ein Bereich angegeben, mit dem die Polwicklungsstützenschrauben 2, 3, 4 angezogen werden und dieser Bereich ermöglicht es, den Schraubenkopf in eine bestimmte Position innerhalb der gezeigten 30°-Rasterung zu bringen. Das Blech mit der Schraubenkopfkontur ist dann sehr einfach zu montieren. Dieses Blech ist die Sicherung 5 bzw. 6, welche mit den Schrauben auf dem Zwischenelement 9 angeschraubt ist. So können insbesondere Verletzungen durch das Umschlagen von Ecken eines Bleches zur Sicherung von Schrauben vermieden werden.

## Patentansprüche

1. Polwicklungsstütze (1) einer elektrischen Maschine, mit Polwicklungsstützenschrauben (2,3,4) und einer Sicherung (5,6) für zumindest eine Polwicklungsstützenschraube (2,3,4), wobei die Sicherung (5,6) fest positioniert ist.

2. Polwicklungsstütze (1) nach Anspruch 1, wobei die Sicherung (5,6) mit einem Zwischenelement (8) verschraubt ist.

3. Polwicklungsstütze (1) nach Anspruch 1 oder 2, wobei die Sicherung (5,6) mit dem Zwischenelement (8) verschweißt ist.

4. Polwicklungsstütze (1) nach einem der Ansprüche 1 bis 3, wobei eine Sicherung (5,6) zumindest zwei Polwicklungsstützenschrauben (2,3,4) sichert.

5. Polwicklungsstütze (1) nach einem der Ansprüche 1 bis 4, wobei die Sicherung (5,6) eine Kontur aufweist, welche der Kontur des Kopfes der Polwicklungsstützenschraube (2,3,4) entspricht.

6. Polwicklungsstütze (1) nach einem der Ansprüche 1 bis 5, wobei die Sicherung (5,6) zwischen zwei Polwicklungsstützenschrauben (2,3,4) angeordnet ist.

7. Polwicklungsstütze (1) nach einem der Ansprüche 1 bis 6, wobei die Polwicklungsstützenschraube (2,3,4) abhängig von der Kontur des Kopfes der Polwicklungsstützenschraube (2,3,4) in einer vorgegebenen Position gesichert ist.

8. Verfahren zur Sicherung einer Polwicklungsstützenschraube einer Polwicklungsstütze einer elektrischen Maschine, wobei Polwicklungsstützenschrauben (2,3,4), abhängig von einer Kontur einer Sicherung (5,6) für die Polwicklungsstützenschrauben (2,3,4), in einer durch die Sicherung (5,6) vorgegebenen Position gesichert werden.

9. Verfahren nach Anspruch 8, wobei die Polwicklungsstützenschrauben (2,3,4) mit unterschiedlichen Anzugsmomenten angezogen werden.

10. Verfahren nach Anspruch 8 oder 9, wobei eine Polwicklungsstütze (1) nach einem der Ansprüche 1 bis 7 verwendet wird.
